Europäisches Patentamt

European Patent Office

Office européen des brevets

(19)

(11) Numéro de publication: **0 192 627 B1**

## (12) FASCICULE DE BREVET EUROPEEN

(45) Date de publication de fascicule du brevet: **06.05.92**

(51) Int. Cl.⁵: **C04B 41/48**, E04B 1/92, E04B 1/64, B05D 5/00

(21) Numéro de dépôt: **86870016.2**

(22) Date de dépôt: **07.02.86**

(54) **Revêtement pour matériaux de construction et procédé de fabrication des constituants de ce revêtement.**

(30) Priorité: **08.02.85 BE 214483**

(43) Date de publication de la demande:
**27.08.86 Bulletin 86/35**

(45) Mention de la délivrance du brevet:
**06.05.92 Bulletin 92/19**

(84) Etats contractants désignés:
**CH DE FR GB IT LI LU NL**

(56) Documents cités:
AU-B- 461 054          DE-A- 2 316 362
FR-A- 2 334 795          FR-A- 2 340 808
FR-A- 2 526 033          GB-A- 1 359 437
US-A- 4 049 869

CHEMICAL ABSTRACTS, vol. 88, no. 22, 29 mai 1978, page 95, no. 154371a, Columbus, Ohio, US; M.A. POST et al.: "Anti-graffiti coatings", & MOD. PAINT COAT. 1978, 68(2), 29-35

(73) Titulaire: **G. LEVASSEUR S.A.**
**Chaussée de Ruysbroek, 121**
**Forest Bruxelles(BE)**

(72) Inventeur: **Lascar, Georges Guy**
**Hertstraat 19**
**B-8400 Oostende(BE)**

(74) Mandataire: **Vigneron, Jean**
**Cabinet VIGNERON 30 avenue Eugène Godaux**
**B-1150 Bruxelles(BE)**

EP 0 192 627 B1

## Description

La présente invention a pour objet un revêtement en particulier revêtement transparent, pour des matériaux de construction, tels que pierres naturelles, pierres reconstituées, béton, brique, asbeste ciment, présentant une haute résistance aux solvants afin de permettre d'éliminer facilement de ce revêtement, sans altération de celui-ci, les graffitis qui y seraient apposés tout comme les salissures atmosphériques ou autres, ledit revêtement, s'opposant également aux attaques chimiques et mécaniques contre lesdits matériaux et évitant l'érosion atmosphérique, chimique et biologique de ces derniers.

On sait que de plus en plus les constructions de tout type sont dégradées, d'une part, par des vandales qui y projettent toutes sortes de produits et, d'autre part, par des projections ou dépôts de salissures et des actions chimiques, atmosphériques ou autres.

On a déjà mis au point des revêtements tels que définis Vol. 88, n° 22, page 25, n° 154371 des Chemical Abstracts et ayant pour but de protéger les constructions contre les agressions susdites tout en permettant de faire disparaître desdites constructions les graffitis ou salissures qui les déparent. Ces revêtements, s'ils donnent parfois de bons résultats au point de vue protection de constructions, présentent le grand inconvénient d'être éliminés en même temps que les salissures, lors de l'enlèvement de ces dernières. On est donc obligé, après chaque nettoyage d'une construction, de procéder à l'application d'un nouveau revêtement. De plus, ces revêtements connus présentent également l'inconvénient de modifier plus ou moins sensiblement l'aspect des surfaces recouvertes.

L'invention a pour but de remédier à ces inconvénients et de procurer un revêtement capable de résister à de nombreux nettoyages à l'eau et même effectués à l'aide de solvants disponibles dans le commerce, tout en n'altérant pas l'aspect initial de ces matériaux.

A cet effet, suivant l'invention, ledit revêtement est constitué d'au moins une couche de base, destinée à boucher les pores du support et à rendre ce dernier hydrofuge, formée par une composition comprenant un copolymère acrylique, un agent de coalescence, un agent modificateur de la tension de surface et de l'eau et d'une couche de finition formée par traitement de réticulation d'une composition à deux composants, le premier comprenant une résine polyacrylate hydroxylée, un agent matant, un solvant et un agent modificateur de la tension de surface tandis que le second composant comprend un polyisocyanate aliphatique et un solvant.

Suivant une forme de réalisation avantageuse du revêtement, la composition pour la formation de la couche de base de celui-ci comprend, en pourcentage en poids, de 17 à 23 % de copolymère acrylique additionné de résine de silicone, de 6 à 8 % d'agent de coalescence, de 0,45 à 0,55 % d'agent modificateur de la tension de surface, de 67 à 77 % d'eau et de 0,5 à 1,5 % d'agent fongicide.

Suivant une forme de réalisation avantageuse du revêtement, le premier composant de la composition à deux composants destinée à former la couche de finition dudit revêtement comprend, en pourcentage en poids, de 17 à 27 % de résine polyacrylate hydroxylée, de 7,5 à 12,5% d'agent matant, de 60 à 70 % de solvant, de 1 à 3 % d'agent fongicide et de 0,18 à 0,22% d'agent modificateur de la tension de surface, tandis que le second composant de cette couche de finition comprend, en pourcentage en poids, de 73 à 77 % de polyisocyanate aliphatique et de 23 à 27 % de solvant.

D'autres détails et particularités de l'invention ressortiront de la description du revêtement et des compositions destinées à former les couches de base et de finition dudit revêtement, donnée ci-après à titre d'exemple non limitatif.

Le revêtement suivant l'invention, qui présente, outre les qualités citées ci-avant, une excellente adhérence aux divers matériaux de construction, tels que pierres naturelles et reconstituées, briques, béton, etc.., une bonne perméabilité à la vapeur d'eau compatible avec la physique de la construction, une bonne résistance aux intempéries et aux rayons ultra-violets, une bonne résistance à la saponification ainsi qu'un excellent compromis dureté de surface- souplesse, peut être réalisé en version mate, satinée, ou brillante et peut, étant donné qu'il durcit à la température ambiante, être utilisé tout aussi bien à l'extérieur qu'à l'intérieur. Ce revêtement qui s'applique facilement à la brosse, au rouleau, ou au pistolet sur un support propre, débarassé de traces de mousses, algues ou champignons et déppussiéré, est constitué d'une ou deux couches de base, en fonction du degré de porosité du support, et d'une couche de finition, ces couches étant généralement transparentes pour préserver l'aspect initial du support.

La ou les couches de base ont pour fonction de boucher les pores du support et de rendre celui-ci hydrofuge pour que l'aspect initial du support ne soit pas modifié lors de l'application de la couche de finition, après séchage de la ou des couches de base.

La composition pour la formation de la couche de base comprend essentiellement un copolymère acrylique, un agent de coalescence, un agent modificateur de la tension de surface et de l'eau. Le copolymère acrylique est avantageusement utilisé pur et additionné de résine de silicone et un agent fongicide est avantageusement ajouté aux composants susdits pour éviter toute prolifération de mousses, algues, etc..

Suivant l'invention, cette composition pour la formation de la couche de base comprend, en pourcentage en poids , de 17 à 23 % de copolymère acrylique additionné de résine de silicone, de 6 à 8 % d'agent de coalescence, de 0,45 à 0,55 % d'agent modificateur de la tension de surface, de 67 à 77 % d'eau et de 0,5 à 1,5 % d'agent fongicide. L'agent de coalescence utilisé est un ester à haut poids moléculaire, tandis que l'agent modificateur de la tension de surface est un polysiloxane et l'agent fongicide est un dithiocarbamate.

La température minimale de formation du film, lors de l'application de la ou des couches de base est de 5 ° C, le temps de séchage pour la pose d'une seconde couche de base ou pour la pose de la couche de finition étant d'environ 24 heures. Le pouvoir couvrant de la couche de base est de l'ordre de 10 m$^2$ par litre.

Le procédé, de préparation de la composition suivant l'invention pour la formation de la couche de base consiste à réaliser une émulsion eau et copolymère acrylique, à dissoudre dans l'eau l'agent modificateur de la tension de surface, à incorporer cette solution à l'émulsion sous agitation jusqu'à obtenir un mélange homogène et à ajouter ensuite, toujours sous agitation, l'agent de coalescence. La résine de silicone qui est ajoutée au copolymère acrylique pur est mise en émulsion dans l'eau en même temps que ce dernier, tandis que l'agent fongicide éventuel est dissout dans l'eau, en même temps que l'agent modificateur de la tension de surface.

La couche de finition du revêtement est un vernis polyuréthane mat, satiné ou brillant, à base d'une résine polyacrylate aliphatique comportant des groupements hydroxyles et est résistante aux intempéries, aux colorants, aux encres, au brouillard salin, aux pluies acides, au CO2, SO2, aux solvants, à l'eau et aux agents chimiques usuels employés pour le décapage des peintures. Cette couche de finition est formée par traitement de réticulation d'une composition à deux composants, le premier étant à base de résine polyacrylate hydroxylée (polyol) et le second étant à base de polyisocyanate aliphatique (durcisseur), ces deux composants étant à mélanger au moment de l'emploi de la couche de finition. Le premier composant susdit comprend, outre la résine polyacrylate hydroxylée, un agent matant, tel que silice colloïdale, métasilicate de magnésium, un solvant, du type acétate, cétone ou aromatique, un agent modificateur de la tension de surface, tel que polysiloxane et éventuellement un agent fongicide, tel que combinaison d'agents fongicides à effet de synergie, du type fluanide. Le second composant de la composition précitée comprend, outre le polyisocyanate précité, un solvant du type acétate/aromatique.

Suivant l'invention, le premier composant de la composition à deux composants comprend avantageusement, en pourcentage en poids, de 17 à 27 % de résine polyacrylate hydroxilée contenant environ 4 % de OH en poids, de 7,5 à 12,5 % d'agent matant, de 60 à 70 % de solvant, de 1 à 3% d'agent fongicide et de 0,18 à 0,22 % d'agent modificateur de la tension de surface .

Le procédé de fabrication de ce premier composant consiste à mélanger intimement l'agent matant, le solvant et l'agent modificateur de la tension de surface et, lorsque le mélange est homogène, à incorporer à celui-ci la résine polyacrylate hydroxylée. Si un agent fongicide est ajouté au premier composant, cet agent est mélangé en même temps que l'agent matant, le solvant et l'agent modificateur de tension de surface.

Le second composant de la composition à deux composants susdite comprend avantageusement, en pourcentage en poids, de 73 à 77 % de polyisocyanate aliphatique non toxique et de 23 à 27 % de solvant.

Lors du mélange des premier et second composants pour former la couche de finition, en vue de l'utilisation de cette dernière, on utilise,en poids, de 98 à 102 parties du premier composant et de 15 à 25 parties du second composant. Ce mélange doit être bien homogène et peut être utilisé tel quel, après débullage, à la brosse ou au rouleau, ou additionné d'une faible quantité de diluant pour l'application au pistolet pneumatique à basse ou haute pression.

Les aspects mat, satiné ou brillant de la couche de finition sont obtenus en ajoutant au mélange susdit un durcisseur approprié dans les proportions de 15 à 25 parties pour 100 parties de mélange, 15 parties correspondant à l'aspect mat, tandis que 25 parties correspondent à l'aspect brillant.

Dans le cas où il serait intéressant d'obtenir un revêtement non transparent, par exemple pour masquer ou modifier l'aspect du support, de teinter la composition à deux composants destinée à former la couche de finition en y incorporant des pigments ou colorants.

La durée de vie en pot du mélange des deux composants de la composition constituant la couche de finition est d'environ 6 heures à 20°C. La température minimale d'application du mélange est de 5°C pour une humidité relative de l'air ambiant comprise entre 65 et 75 %.

A titre d'indication, le temps de séchage du film constitué lors de l'application du mélange, effectuée à 20 ° C et avec une humidité relative de 50 %, est d'environ 30 minutes hors poussière, 60 minutes hors toucher. Il est sec en 24 heures et met 48 heures pour atteindre la réticulation complète. Il est évident que ces données varient en fonction des conditions lors de l'application, les temps augmentant lorsque la température tombe en dessous de 20°C et que l'humidité relative croît au delà des 50 %, tandis que ces temps diminuent lorsque la température monte au-dessus des 20°C et que l'humidité relative décroît à partir des 50%.

Le pouvoir couvrant de la couche de finition est de l'ordre de 8 m² par litre de mélange.

Les performances du revêtement suivant l'invention sont les suivantes :

Quadrillage :

10 X 10 sur béton, asbeste-ciment, pierre bleue, pierre de France, brique et marbre.

Emboutissage :

9 mm. (suivant ERICHSEN)

Résistance aux chocs :

1 kg/30 à 35 cm.

Résistance à l'impact :

très bonne.

Pliage au mandrin conique :

pas de fissure du revêtement, même au plus petit rayon.

Résistance à la rayure :

très bonne.

Dureté Persoz :

4'30" - après une semaine de séchage.

## Revendications

1. Revêtement, en particulier revêtement transparent, pour des matériaux de construction, tels que pierres naturelles, pierres reconstituées, béton, brique, asbeste, ciment, présentant une haute résistance aux solvants afin de permettre d'éliminer facilement de ce revêtement, sans altération de celui-ci, les graffitis qui y seraient apposés tout comme les salissures atmosphériques ou autres, ledit revêtement, s'opposant également aux attaques chimiques et mécaniques contre lesdits matériaux et évitant l'érosion atmosphérique, chimique et biologique de ces derniers, étant caractérisé en ce qu'il est constitué d'au moins une couche de base, destinée à boucher les pores du support et à rendre ce dernier hydrofuge, formée par une composition comprenant un copolymère acrylique, un agent de coalescence, un agent modificateur de la tension de surface et de l'eau et d'une couche de finition formée par traitement de réticulation d'une composition à deux composants, le premier comprenant une résine polyacrylate hydroxylée, un agent matant, un solvant et un agent modificateur de la tension de surface tandis que le second composant comprend un polyisocyanate aliphatique et un solvant.

2. Revêtement suivant la revendication 1, caractérisé en ce que le copolymère acrylique faisant partie de la composition pour la formation de la couche de base est pur et additionné de résine de silicone.

3. Revêtement suivant l'une ou l'autre des revendications 1 et 2, caractérisé en ce que la composition pour la formation de la couche de base comprend un agent fongicide.

4. Revêtement suivant la revendication 3, caractérisé en ce que la composition pour la formation de la couche de base comprend, en pourcentage en poids, de 17 à 23 % de copolymère acrylique additionné de résine de silicone, de 6 à 8 % d'agent de coalescence, de 0,45 à 0,55 % d'agent modificateur de la tension de surface, de 67 à 77 % d'eau et de 0,5 à 1,5 % d'agent fongicide.

5. Revêtement suivant l'une quelconque des revendications 1 à 4, caractérisé en ce que l'agent de coalescence faisant partie de la composition pour la formation de la couche de base susdite est un ester à haut poids moléculaire.

6. Revêtement suivant l'une quelconque des revendications 1 à 5, caractérisé en ce que l'agent modificateur de la tension de surface faisant partie de la composition pour la formation de la couche de base est un polysiloxane.

7. Revêtement suivant l'une quelconque des revendications 3 à 5, caractérisé en ce que l'agent fongicide faisant partie de la composition pour la formation de la couche de base est un dithiocarbamate.

8. Revêtement suivant l'une quelconque des revendications 1 à 7, caractérisé en ce que le premier composant de la composition à deux composants destinée à former la couche de finition comprend un agent fongicide.

9. Revêtement suivant la revendication 8, caractérisé en ce que l'agent fongicide du premier composant précité est une combinaison d'agents fongicides à effet de synergie, du type fluanide.

**10.** Revêtement suivant l'une quelconque des revendications 1 à 9, caractérisé en ce que l'agent matant du premier composant susdit est de la silice colloïdale ou du métasilicate de magnésium.

**11.** Revêtement suivant l'une quelconque des revendications 1 à 10, caractérisé en ce que le solvant du premier composant susdit est du type acétate, cétone ou aromatique.

**12.** Revêtement suivant l'une quelconque des revendications 1 à 11, caractérisé en ce que l'agent modificateur de la tension de surface du premier composant précité est un polysiloxane.

**13.** Revêtement suivant l'une quelconque des revendications 8 à 12, caractérisé en ce que le premier composant susdit comprend, en pourcentage en poids, de 17 à 27 % de résine polyacrylate hydroxilée, de 7,5 à 12,5 % d'agent matant, de 60 à 70 % de solvant, de 1 à 3 % d'agent fongicide et de 0,18 à 0,22 % d'agent modificateur de la tension de surface.

**14.** Revêtement suivant l'une quelconque des revendications 8 à 13, caractérisé en ce que le premier composant précité comprend des pigments ou colorants.

**15.** Revêtement suivant l'une quelconque des revendications 1 à 14, caractérisé en ce que le solvant du second composant de la composition à deux composants destinée à former la couche de finition est un mélange de solvant acétate/aromatique.

**16.** Revêtement suivant l'une quelconque des revendications 1 à 15, caractérisé en ce que le second composant susdit comprend, en pourcentage en poids, de 73 à 77 % de polyisocyanate aliphatique et de 23 à 27 % de solvant.

**17.** Revêtement suivant l'une quelconque des revendications 1 à 16, caractérisé en ce que la composition précitée destinée à former la couche de finition comprend, en poids, de 98 à 102 parties du premier composant et 15 à 25 parties du second composant.

**Claims**

**1.** Coating, in particular transparent coating for building materials such as natural stones, recombined stones, concrete, brick, asbestos, cement that display a high resistance to solvents in order to allow for eliminating easily from this coating and without debasing the latter, any and all graffiti applied thereon as well as atmospheric and other dirt, resisting also chemical and mechanical attacks directed at the said materials and preventing atmospheric, chemical and biological erosion of the latter, characterized in that it consists of one basic coat, at least, that is destined to plug the pores of the support and thus make the latter water-repellent, which coat consists of a compound that comprises an acrylic copolymer, a coalescing agent, a surface tension modifying agent and water, and a finishing coat obtained by reticulating treatment of a two-component compound, with the first comprising a hydroxylated polyacrylate resin, a caulking agent, a solvent and a surface tension modifying agent whereas the second component comprises an aliphatic polyisocyanate and a solvent.

**2.** Coating according to claim 1, characterized in that the acrylic copolymer that is part of the compound forming the basic coat is pure and that silicone resin has been added thereto.

**3.** Coating according to one or the other of the claims 1 and 2, characterized in that the compound forming the basic coat also comprises a fungicide.

**4.** Coating according to claim 3, characterized in that the compound forming the basic coat comprises, in percent of weight, from 17 to 23 % of acrylic copolymer to which is added silicone resin, 6 to 8 % of coalescing agent, 0.43 to 0.55 % of surface tension modifying agent, from 67 to 77 % of water and from 0.5 to 1.5 % of fungicide.

**5.** Coating according to any one of the claims 1 to 4, characterized in that the coalescing agent that is part of the compound forming the said basic coat, is a high molecular weight ester.

**6.** Coating according to any one of the claims 1 to 5, characterized in that the surface tension modifying agent that is part of the compound forming the basic coat, is a polysiloxane.

**7.** Coating according to any one of the claims 3 to 5, characterized in that the fungicide that is part of the compound forming the basic coat is a dithiocarbamate.

8. Coating according to any one of the claims 1 to 7, characterized in that the first component of the two-component compound destined to form the finishing coat, comprises a fungicide.

9. Coating according to claim 8, characterized in that the fungicide of the said first component is a synergetic effect and fluanide type combination of fungicides.

10. Coating according to any one of the claims 1 to 9, characterized in that the caulking agent of the said first component is a colloidal silicon or magnesium metasilicate.

11. Coating according to any one of the claims 1 to 10, characterized in that the solvent of the said first component is acetate, ketone or aromatic type.

12. Coating according to any one of the claims 1 to 11, characterized in that the surface tension modifying agent of the said first component is a polysiloxane.

13. Coating according to any one of the claims 8 to 12, characterized in that the said first component comprises, in percent of weight, 17 to 27 % of hydroxylated polyacrylate resin, 7.5 to 12.5 % of caulking agent, 60 to 70 % of solvent, 1 to 3 % of fungicide and 0.18 to 0.22 % of surface tension modifying agent.

14. Coating according to any one of the claims 8 to 13, characterized in that the said first component comprises pigments or dyestuffs.

15. Coating according to any one of the claims 1 to 14, characterized in that the solvent of the second component of the two-component compound destined to form the finishing coat, is a blend of acetate/aromatic solvent.

16. Coating according to any one of the claims 1 to 15, characterized in that the said second component comprises, in percent of weight, 73 to 77 % of aliphatic polyisocyanate and 23 to 27 % of solvent.

17. Coating according to any one of the claims 1 to 16, characterized in that the said compound destined to form the finishing coat comprises, in weight, from 98 to 102 parts of the first component and from 15 to 25 parts of the second component.

**Patentansprüche**

1. Beschichtung, insbesondere transparente Beschichtung, für Baumaterialien, wie Naturstein, künstliche Bruchsteine, Beton, Ziegel, Asbest, Zement, die sehr lösungsmittelfest ist, damit von dieser Beschichtung, ohne Beschädigung derselben, darauf angebrachte Graffiti-Bemalungen sowie atmosphärische oder andere Verschmutzungen entfernt werden können, und die auch chemischen und mechanischen Einflüssen auf die vorgenannten Materialien entgegenwirkt und eine atmosphärische, chemische und biologische Erosion dieser Materialien verhindert, **dadurch gekennzeichnet,** daß sie aus mindestens einer Grundschicht besteht, welche dazu dient, die Poren des Trägermaterials zu verstopfen und letzteres wasserabstoßend zu machen, und deren Zusammensetzung ein Acrylcopolymer, ein Koaleszenzmittel, ein Mittel zur Veränderung der Oberflächenspannung und Wasser umfaßt, und einer Deckschicht, die durch eine Vernetzungsbehandlung einer aus zwei Komponenten bestehenden Zusammensetzung entsteht, wobei die erste Komponente ein hydroxiliertes Polyacrylatharz, ein Mattierungsmittel, ein Lösungsmittel und ein Mittel zur Veränderung der Oberflächenspannung enthält, während die zweite Komponente ein aliphatisches Polyisocyanat und ein Lösungsmittel umfaßt.

2. Beschichtung gemäß Anspruch 1, **dadurch gekennzeichnet,** daß das Acrylcopolymer, das Teil der Zusammensetzung für die Bildung der Grundschicht ist, rein und mit Silikonharz ist.

3. Beschichtung gemäß Anspruch 1 oder 2, **dadurch gekennzeichnet,** daß die Zusammensetzung für die Bildung der Grundschicht ein Fungizid enthält.

4. Beschichtung gemäß Anspruch 3, **dadurch gekennzeichnet,** daß die Zusammensetzung für die Bildung der Grundschicht in Gewichtsprozenten aus 17 bis 23 % Acrylcopolymer mit Silikonharz, 6 bis 8 % Koaleszenzmittel, 0,45 bis 0,55 % Mittel zur Veränderung der Oberflächenspannung, 67 bis 77 % Wasser und 0,9 bis 1,5 % Fungizid besteht.

5. Beschichtung gemäß einem der vorhergehenden Ansprüche 1 bis 4, **dadurch gekennzeichnet,** daß das Koaleszenzmittel, das Teil der Zusammensetzung für die Bildung der vorgenannten Grundschicht ist, ein Ester mit hohem Molekulargewicht ist.

6. Beschichtung gemäß einem der vorhergehenden Ansprüche 1 bis 5,
**dadurch gekennzeichnet,**
daß das Mittel zur Veränderung der Oberflächenspannung, das Teil der Zusammensetzung für die Bildung der Grundschicht ist, eine Polysiloxan ist.

7. Bezchichtung gemäß einem der vorhergehenden Ansprüche 3 bis 5,
**dadurch gekennzeichnet,**
daß das Fungizid, das Teil der Zusammensetzung für die Bildung der Grundschicht ist, ein Dithiocarbamat ist.

8. Beschichtung gemäß einem der vorhergehenbden Ansprüche 1 bis 7,
**dadurch gekennzeichnet,**
daß die erste Komponente der Zweikomponentenzusammensetzung, welche die Deckschicht bilden soll, ein Fungizid enthält.

9. Beschichtung gemäß Anspruch 8,
**dadurch gekennzeichnet,**
daß das Fungizid der vorgenannten ersten Komponente eine Verbindung von Fungiziden mit synergistischem Effekt vom Typ Fluanid ist.

10. Beschichtung gemäß einem der vorhergehenden Ansprüche 1 bis 9,
**dadurch gekennzeichnet,**
daß das Mattierungsmittel der vorgenannten ersten Komponente aus kolloidalem Kieselsäureanhydrid oder Magnesiummetasilikat besteht.

11. Beschichtung gemäß einem der vorhergehenden Ansprüche 1 bis 10,
**dadurch gekennzeichnet,**
daß das Lösungsmittel der vorgenannten ersten Komponente vom Typ Acetat, Keton oder aromatische Substanz ist.

12. Beschichtung gemäß einem der vorhergehenden Ansprüche 1 bis 11,
**dadurch gekennzeichnet,**
daß das Mittel zur Veränderung der Oberflächenspannung der vorgenannten ersten Komponente ein Polysiloxan ist.

13. Beschichtung gemäß einem der vorhergehenden Ansprüche 8 bis 12,
**dadurch gekennzeichnet,**
daß die vorgenannte erste Komponente in Gewichtsprozenten aus 17 bis 27 % hydroxiliertem Polyacrylatharz, 7,5 bis 12,5 % Mattierungsmittel, 60 bis 70 % Lösungsmittel, 1 bis 39 % Fungizid und 0,18 bis 0,22 % Mittel zur Veränderung der Oberflächenspannung besteht.

14. Beschichtung gemäß einem der vorhergehenden Ansprüche 1 bis 13,
**dadurch gekennzeichnet,**
daß die vorgenannte erste Komponente Pigmente oder Farbstoffe enthält.

15. Beschichtung gemäß einem der vorhergehenden Ansprüche 1 bis 14,
**dadurch gekennzeichnet,**
daß das Lösungsmittel der zweiten Komponente der Zweikomponentenzusammensetzung, welche die Deckschicht bilden soll, eine Mischung aus Acetat- und aromatischem Lösungsmittel ist.

16. Beschichtung gemäß einem der vorhergehenden Ansprüche 1 bis 15,
**dadurch gekennzeichnet,**
daß die vorgenannte zweite Komponente in Gewichtsprozenten aus 73 bis 77 % aliphatischem Polyisocyanat und 23 bis 27 % Lösungsmittel besteht.

17. Beschichtung gemäß einem der vorhergehenden Ansprüche 1 bis 16
**dadurch gekennzeichnet,**
daß die vorgenannte Zusammensetzung, welche die Deckschicht bilden soll, 98 bis 102 Gewichtsteile der ersten Komponente und 15 bis 25 Gewichtsteile der zweiten Komponente enthält.